# FASCICULE DE BREVET EUROPEEN

(11) **EP 2 116 124 B1**
(45) Date de publication et mention de la délivrance du brevet: **27.03.2013**
(21) Numéro de dépôt: 09159361.6
(22) Date de dépôt: 05.05.2009
(51) Int. Cl.: A01D 75/20, A01D 78/10, A01D 34/66

(54) **Machine de fenaison avec un protecteur central perfectionné**
Heuwerbungsmaschine mit einem verbesserten zentralen Schutz
Hay making machine with an improved central guard

(30) Priorité: 06.05.2008 FR 0852993
(43) Date de publication de la demande: 11.11.2009
(73) Titulaire: KUHN S.A., 67700 Saverne (FR)
(72) Inventeur: Walch, Martin, 67490, DETTWILLER (FR)

(56) Documents cités:
- EP-A- 0 310 532
- DE-A1- 19 718 110
- DE-U1- 8 407 525
- FR-A- 2 562 758
- US-A- 5 279 100
- US-A- 5 765 348

## Description

La présente invention se rapporte au domaine technique général du machinisme agricole et en particulier à une machine de fenaison pouvant être attelée à un tracteur et comportant un châssis portant un mécanisme de coupe comportant des outils de coupe et une structure porteuse destinée à supporter un dispositif de protection, ledit dispositif de protection étant composé d'au moins un protecteur central.

Des machines de fenaison sont par exemple des machines de coupe du type faucheuses rotatives, faucheuses-broyeuses à un ou plusieurs axes verticaux ou à axe horizontal. Les faucheuses rotatives connues comportent un mécanisme de coupe avec des outils de coupe sous forme de disques ou de tambours. Ces disques ou tambours sectionnent du produit sur pied, par exemple de l'herbe, au moyen de couteaux rotatifs tournant à vitesse élevée. Les faucheuses sont protégées pour éviter tout contact avec les outils de coupe en rotation à l'avant, à l'arrière, sur les côtés et sur le dessus. Le dispositif de protection masque les outils de coupe et empêche les projections de terre voire de cailloux. Le dispositif de protection comporte ainsi au moins un protecteur central, au moins un protecteur arrière et de part et d'autre un protecteur latéral. Au cours du travail, les couteaux s'usent et peuvent aussi être détériorés par un obstacle. Une opération classique de maintenance est donc le remplacement de ces couteaux. Cette opération est généralement réalisée lorsque le mécanisme de coupe est dégagé du sol, ce qui permet un travail plus facile.

Une telle machine est par exemple une faucheuse conditionneuse traînée. Cette faucheuse comporte un mécanisme de coupe lié à un châssis qui repose sur le sol au moyen de roues. Elle est attelée au tracteur via un timon qui est lié au châssis et qui s'étend au moins partiellement au-dessus du mécanisme de coupe. Le timon porte des organes de transmission permettant l'entraînement en rotation des outils du mécanisme de coupe. Le mécanisme de coupe comporte une structure porteuse et un dispositif de protection. La structure porteuse supporte le dispositif de protection et ce dernier recouvre le mécanisme de coupe. Le dispositif de protection comporte un protecteur central qui protège la partie en avant et la partie au-dessus des outils de coupe. La réglementation impose pour ce protecteur central, une distance minimale au-dessus et en avant des outils de coupe.

Pour accéder aux outils de coupe et faciliter les travaux de maintenance, le protecteur central est dégagé. Sur cette machine, le protecteur central est lié à la structure porteuse par l'intermédiaire d'une articulation d'axe sensiblement horizontal et perpendiculaire à la direction d'avance. Cette articulation s'étend au-dessus du mécanisme de coupe. Le dégagement se fait donc par pivotement autour de cette articulation. Lorsque le mécanisme de coupe est éloigné du sol, on remarque que l'articulation est disposée à proximité du timon et de l'organe de transmission et qu'il n'est donc plus possible de faire pivoter le protecteur central autour de l'articulation. Le dégagement du protecteur central est donc réalisé depuis la position de travail lorsque le mécanisme de coupe est proche du sol. Cette condition nécessite pour l'utilisateur la réalisation de diverses actions. Ainsi, il devra descendre du tracteur, dégager le protecteur central par pivotement autour de l'articulation, puis il devra remonter dans le tracteur, éloigner le mécanisme de coupe du sol et finalement il redescendra du tracteur pour réaliser l'opération de maintenance. Lorsque cette dernière est achevée, l'utilisateur fera la démarche décrite précédemment dans le sens inverse pour que la faucheuse soit à nouveau opérationnelle. On constate donc qu'accéder aux outils de coupe est une opération pénible nécessitant beaucoup de descentes et montées du tracteur et qui est coûteuse en temps.

Sur une autre machine, le protecteur central est dégagé par pivotement autour d'une articulation d'axe sensiblement vertical. L'articulation verticale est placée à l'avant et à une extrémité du protecteur central. Le pivotement est réalisé manuellement en soulevant le protecteur central par l'autre extrémité. Un dégagement complet du protecteur central est seulement possible lorsque le timon s'étend latéralement ou est dégagé d'un côté dans le cas d'un timon central. L'extrémité déplacée du protecteur central est soutenue par une béquille. L'ouverture par pivotement du protecteur central est réalisée lorsque le mécanisme de coupe est proche du sol. Dans cette position proche du sol, l'ouverture du protecteur central est facilitée, par contre l'utilisateur ne bénéficie pas de bonnes conditions pour l'échange des couteaux.

Le document US 5 279 100 se rapporte à une machine de fenaison comportant un châssis portant un mécanisme de coupe avec des outils de coupe et une structure porteuse destinée à supporter un dispositif de protection. Le dispositif de protection est composé d'un protecteur central et de deux protecteurs intermédiaires. Le protecteur central a une position fixe sur la structure porteuse qui est imposée par l'organe de transmission. Chaque protecteur intermédiaire pivote autour d'une articulation d'axe horizontal pour libérer l'accès au mécanisme de coupe. Le protecteur intermédiaire étant maintenu dans sa position dégagée par une jambe de maintien.

La présente invention a pour but de remédier aux inconvénients précités en proposant une machine avec un protecteur central perfectionné permettant un accès rapide, facile et ergonomique aux outils du mécanisme de coupe.

A cet effet, une importante caractéristique de l'invention consiste en ce que ledit protecteur central est articulé sur ladite structure porteuse par l'intermédiaire d'au moins une bielle et que le déplacement dudit protecteur central est guidé à l'arrière par ladite bielle et à l'avant par un ergot qui est amené à se déplacer dans une rainure. De cette manière, l'accès au mécanisme de coupe est aisé et les conditions de travail pour les opérations de maintenance sont améliorées.

Selon une autre caractéristique importante de l'invention, le protecteur central est déplacé selon un mouvement combiné de rotation et de translation. Grâce à ce mouvement combiné, le dégagement du protecteur central est réalisé avec un minimum d'encombrement en hauteur.

D'autres caractéristiques et avantages de l'invention se dégageront des revendications et de la description qui vont suivre de l'exemple de réalisation non limitatif de l'invention avec référence aux dessins annexés dans lesquels :
- la **figure 1** représente une vue de dessus de la machine de fenaison selon l'invention,
- la **figure 2** représente une vue latérale de la machine en position de travail,
- la **figure 3** représente une vue latérale de la machine en position relevée de transport,
- la **figure 4** est une vue latérale à plus grande échelle de la figure 3.

Telle qu'elle est représentée sur les figures, la machine de fenaison (1) est tractée dans une direction et un sens d'avance (A). Dans la suite de la description, les notions suivantes "avant" et "arrière", "devant" et "derrière" sont définies par rapport au sens d'avance (A), et les notions "droite" et "gauche" sont définies en regardant la machine de l'arrière dans le sens d'avance (A). Elle comporte un châssis (2) roulant sur le sol au moyen de deux roues (3). Le châssis (2) supporte un mécanisme de coupe (4) au moyen d'un dispositif de suspension (5). Le châssis (2) est lié à l'arrière d'un tracteur (non représenté) au moyen d'un timon (6). L'intégralité de la longueur du timon (6) n'est pas représentée sur les figures. Le timon (6) sert aussi à animer le mécanisme de coupe (4), à partir de la prise de force du tracteur, au moyen d'organes de transmission (7).

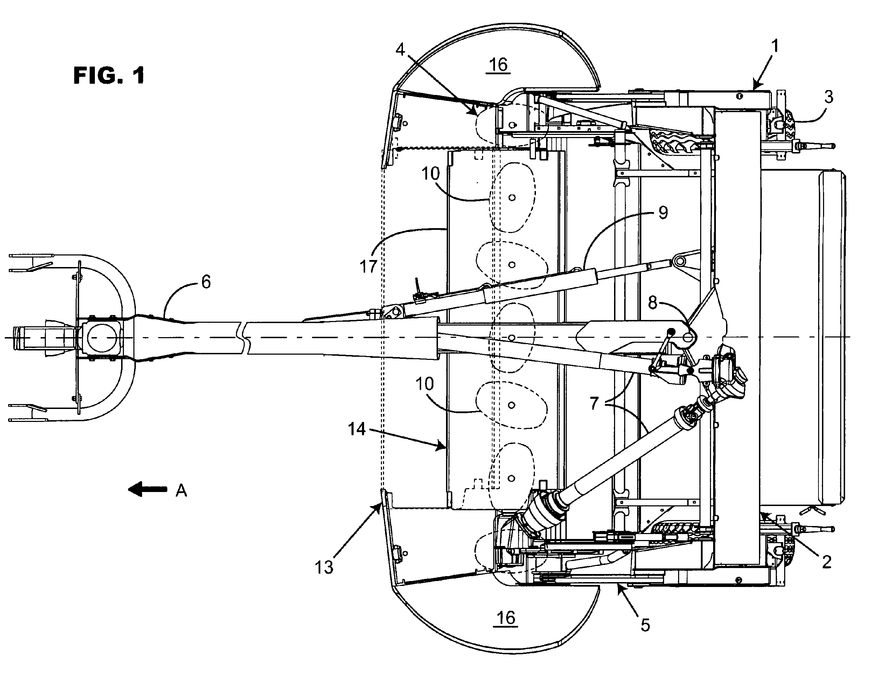

Le timon (6) est lié au châssis (2) au moyen d'une articulation (8) d'axe dirigé vers le haut. L'articulation (8) permet avantageusement à la machine (1) d'occuper, par rapport au tracteur, une position de transport et au moins une position de travail. A la lumière de la figure 1, l'articulation (8) est située au moins sensiblement dans un plan vertical médian de la machine (1). La machine (1) est disposée dans le prolongement du tracteur pour le transport (fig. 1) alors qu'elle est décalée latéralement par rapport au tracteur lors du travail. La position du châssis (2) par rapport au timon (6) peut être modifiée à l'aide d'un vérin hydraulique (9). En pivotant le timon (6) par rapport au châssis (2) autour de l'articulation (8), la machine (1) peut être déplacée vers la droite ou vers la gauche du tracteur. Ces deux positions, utilisées au travail, permettent à la machine (1) de travailler en va-et-vient.

Le mécanisme de coupe (4) est destiné à couper du produit sur pied, pour cela il présente des outils de coupe (10). Dans l'exemple représenté, les outils de coupe (10) sont des disques munis à leur périphérie d'outils de coupe tels que des couteaux (11). Les outils de coupe (10) sont agencés l'un à côté de l'autre suivant une ligne au moins sensiblement perpendiculaire à la direction d'avancement (A). Chaque outil de coupe (10), représenté symboliquement sur la figure 1, est animé en rotation autour d'un axe respectif dirigé vers le haut via les organes de transmission (7). Au travail, le mécanisme de coupe (4) repose au moins sensiblement au sol et doit suivre le relief du terrain pour assurer une bonne coupe. Grâce au dispositif de suspension (5), le mécanisme de coupe (4) est apte à suivre les dénivellations du sol indépendamment du châssis (2).

Le mécanisme de coupe (4) comporte une structure porteuse (12). Elle est liée au mécanisme de coupe (4) au moyen de deux parois latérales s'étendant vers le bas. La structure porteuse (12) s'étend au-dessus du mécanisme de coupe (4). Elle est destinée à supporter un dispositif de protection (13) qui entoure le mécanisme de coupe (4). Le dispositif de protection (13) est destiné d'une part, à empêcher l'accès inopiné aux outils de coupe (10) pour prévenir des accidents corporels et d'autre part à empêcher la projection d'objets tels que des pierres par exemple. Le dispositif de protection (13) comporte ainsi au moins un protecteur central (14), au moins un protecteur arrière (15) et de part et d'autre un protecteur latéral (16). Le protecteur central (14) protège notamment la partie en avant et la partie au-dessus des outils de coupe (10). Pour compléter cette protection, les protecteurs latéraux (16) s'étendent de part et d'autre du mécanisme de coupe (4) et le protecteur arrière (15) s'étend derrière le mécanisme de coupe (4). Ainsi, les outils de coupe (10) sont parfaitement masqués par le dispositif de protection (13).

La machine de fenaison (1) représentée sur les figures est une faucheuse conditionneuse. Le mécanisme de coupe (4) est ainsi complété par un dispositif de traitement (27) destiné à accélérer le séchage du produit coupé. Ce dispositif de traitement (27) s'étend à l'arrière du mécanisme de coupe (4). Dans ce cas, le protecteur arrière (15) est disposé derrière le dispositif de traitement (27).

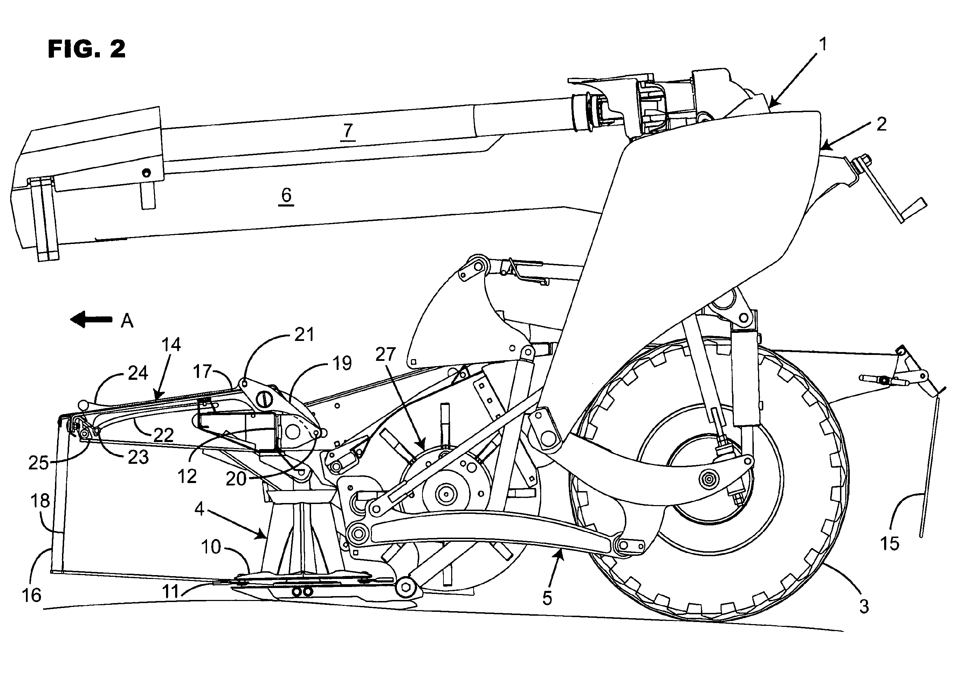

La figure 2 illustre selon une vue de côté, la machine (1) dans une position de travail dans laquelle le mécanisme de coupe (4) est proche du sol. Le protecteur central (14) s'étend sensiblement au-dessus des outils de coupe (10) et sensiblement en avant compte tenu de la direction d'avance (A). Le protecteur central (14) comporte deux parties : une partie supérieure (17) et une partie frontale (18). La partie supérieure (17) s'étend sensiblement horizontalement et au moins sensiblement devant les outils de coupe (10). La partie supérieure (17) est relativement rigide et permet ainsi à l'utilisateur d'accéder aux organes de transmission (7) au niveau du châssis (2). La structure porteuse (12) qui porte la partie supérieure (17) présente des renforts dans la région sur laquelle l'utilisateur est amené à passer, le cas échéant. Selon un autre exemple de réalisation, la partie supérieure (17) est une toile empêchant les projections. La partie frontale (18) est, quant à elle, montée à l'avant de la partie supérieure (17) selon la direction d'avance (A). Elle s'étend au moins sensiblement verticalement vers le bas jusque dans le voisinage des outils de coupe (10) durant le travail. La partie frontale (18) permet notamment d'absorber l'énergie cinétique d'objets volants qui sont projetés latéralement par le mécanisme de coupe (4). Cette partie frontale (18) est flexible et généralement constituée d'une toile en caoutchouc.

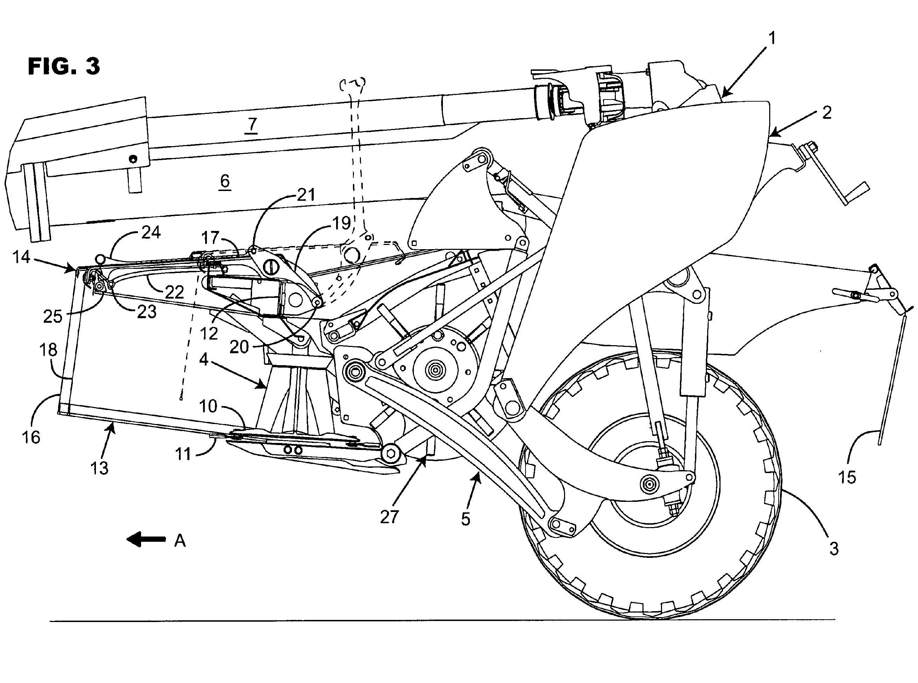

La figure 3 représente, selon une vue de côté, la machine (1) dans sa position de transport. Dans cette position, le mécanisme de coupe (4) est éloigné du sol, il s'étend à une certaine hauteur au-dessus du sol. Les opérations de maintenance sont avantageusement réalisées dans cette position. L'utilisateur bénéficie ainsi d'une position ergonomique pour l'échange des couteaux. Le dégagement du protecteur central (14) permet un meilleur accès au mécanisme de coupe (4). Alternativement, une vérification du mécanisme de coupe (4) pourra être faite depuis la position de travail.

Selon une importante caractéristique de l'invention, le protecteur central (14) est articulé sur la structure porteuse (12) par l'intermédiaire d'au moins une bielle (19). Grâce à cette bielle (19), l'accès au mécanisme de coupe (4) est rapide, pratique et les conditions pour la réalisation des opérations de maintenance sont ergonomiques. Cette bielle (19) est liée à une de ses extrémités à la structure porteuse (12) via une articulation inférieure (20) d'axe sensiblement horizontal et perpendiculaire à la direction d'avance (A). L'autre extrémité de la bielle (19) est liée au protecteur central (14) via une articulation supérieure (21) d'axe sensiblement horizontal et perpendiculaire à la direction d'avance (A). A la lumière de la figure 1, on remarque que la largeur du protecteur central (14) permet un accès commode à tous les outils (10) du mécanisme de coupe (4). Sur cette figure, le protecteur central (14) est représenté d'une part en traits continus dans sa position ouverte pour la maintenance et d'autre part dans sa position fermée de travail avec les traits discontinus.

D'une manière particulièrement avantageuse, le protecteur central (14) est déplacé selon un mouvement combiné de rotation et de translation par rapport à l'articulation inférieure (20). Compte tenu de la direction d'avance (A), le dégagement du protecteur central (14) se fait vers l'arrière par rapport au mécanisme de coupe (4). Ce dégagement est réalisé avec un minimum d'encombrement en hauteur. Le protecteur central (14), de la figure 3, est représenté dans deux positions. Une position fermée représentée en traits continus et une position ouverte représentée en traits discontinus. Lors du travail, le protecteur central (14) doit toujours être en position fermée pour la sécurité alors que lors de la maintenance le protecteur central (14) est ouvert pour faciliter l'accès au mécanisme de coupe (4).

Dans l'exemple de réalisation représenté, l'articulation inférieure (20) s'étend sensiblement en dessous de l'articulation supérieure (21) et sensiblement en arrière de la structure porteuse (12). L'articulation supérieure (21) s'étend au-dessus du protecteur central (14) et dans le voisinage de son extrémité arrière compte tenu de la direction d'avance (A). Lors de l'ouverture ou de la fermeture du protecteur central (14), l'articulation supérieure (21) passe d'une position à l'avant vers une position à l'arrière par rapport à l'articulation inférieure (20). Le dégagement du protecteur central (14) vers l'arrière autour de l'articulation inférieure (20) est réalisé manuellement. Dans une autre réalisation, l'articulation inférieure (20) pourrait être disposée à l'avant de la structure porteuse (12) et l'articulation supérieure (21) serait alors disposée dans le voisinage de l'extrémité avant du protecteur central (14).

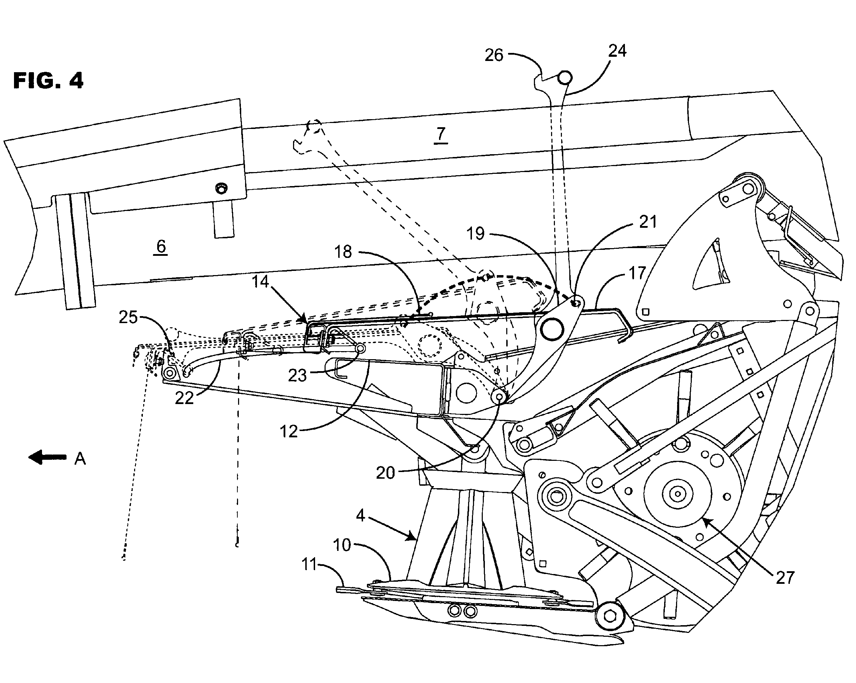

La figure 4 représente, plus en détail, une partie de la machine (1) avec le mécanisme de coupe (4) éloigné du sol. Dans cette position, le mécanisme de coupe (4) est placé au plus près du timon (6). Le protecteur central (14) est représenté dans trois positions qui peuvent être différencié par le style de lignes. La position ouverte est représentée en traits continus. Les petits traits discontinus correspondent à la position fermée et les grands traits discontinus définissent une position intermédiaire du protecteur central (14). On remarque que l'espace disponible entre le timon (6) et le mécanisme de coupe (4) est amplement suffisant pour le dégagement du protecteur central (14). Lorsque le protecteur central (14) est ouvert, la partie frontale (18) peut être relevée sur la partie supérieure (17) pour faciliter l'accès aux outils de coupe (10).

Selon la largeur de travail de la machine (1), le protecteur central (14) est réalisé en une ou plusieurs parties. Chaque partie comporte alors au moins une bielle (19). Lors de l'utilisation d'une seule bielle (19), celle-ci est disposée au moins sensiblement dans le plan vertical médian du protecteur central (14). Dans l'exemple de réalisation représenté, le protecteur central (14) est lié à la structure porteuse (12) par l'intermédiaire de deux bielles (19). Une bielle (19) étant disposée de chaque côté du protecteur central (14), de manière symétrique par rapport au plan vertical médian de la machine (1).

Lors du dégagement, les coins avant du protecteur central (14) sont amenés à glisser sur le protecteur latéral (16). D'une manière alternative et selon l'exemple représenté, la partie avant du protecteur central (14) est amenée à coulisser dans une rainure (22) au moyen d'un ergot (23). L'ergot (23) étant relié à la partie avant et la rainure (22) étant ménagée dans la structure porteuse (12). La rainure (22) est longitudinale et autorise le dégagement du protecteur central (14). Le guidage du déplacement du protecteur central (14) est amélioré grâce à la rainure (22). Dans une autre alternative, les guidages du protecteur central (14) sont inversés. Ainsi, la bielle (19) guide la partie avant et la rainure (22) et l'ergot (23) guident la partie arrière du protecteur central (14). Dans un autre exemple de réalisation, le guidage composé de la rainure (22) et de l'ergot (23) est remplacé par une bielle dont une extrémité est liée à la structure porteuse (12) et l'autre extrémité est liée au protecteur central (14). Le protecteur central (14) est alors articulé sur la structure porteuse (12) au moyen de deux bielles. Ces deux bielles forment alors avantageusement un quadrilatère.

Pour faciliter le déplacement du protecteur central (14), il est actionné par au moins un levier (24). Le levier (24) est ainsi relié d'une part au protecteur central (14) au moyen de l'articulation supérieure (21) et est lié d'autre part à la structure porteuse (12) via l'articulation inférieure (20). Il comporte une poignée pour la manipulation. Le levier (24) s'étend sensiblement horizontalement lorsque le protecteur central (14) est fermé et s'étend sensiblement verticalement lorsque le protecteur central (14) est ouvert. Dans l'exemple représenté, le protecteur central (14) est actionné par un seul levier (24). Le levier (24) est disposé d'un côté du protecteur central (14).

Pour éviter une ouverture du protecteur central (14) durant le travail, ce dernier est verrouillé. La structure porteuse (12) comporte ainsi un verrou (25). Le verrou (25) s'étend au voisinage de la partie avant de la partie supérieure (17). Dans l'exemple représenté, le protecteur central (14) est verrouillé par l'intermédiaire du levier (24). Ce dernier présente un arrêt (26) destiné à être bloqué par le verrou (25).

Il est bien évident que l'invention n'est pas limitée aux modes de réalisation décrits ci-dessus et représentés sur les dessins annexés. Des modifications restent possibles, notamment en ce qui concerne la constitution ou le nombre des divers éléments ou par substitution d'équivalents techniques, sans pour autant sortir du domaine de protection tel qu'il est défini par les revendications suivantes.

On notera que l'invention s'applique à des faucheuses-conditionneuses à timon central avec l'articulation disposée sensiblement dans le plan vertical médian comme dans l'exemple représenté tout comme à des faucheuses-conditionneuses à timon latéral dont l'articulation est disposée latéralement.

## Revendications

1. Machine de fenaison (1) pouvant être attelée à un tracteur et comportant un châssis (2) portant un mécanisme de coupe (4) comportant des outils de coupe (10) et une structure porteuse (12) destinée à supporter un dispositif de protection (13), ledit dispositif de protection (13) étant composé d'au moins un protecteur central (14), ***caractérisée en ce que*** ledit protecteur central (14) est articulé sur ladite structure porteuse (12) par l'intermédiaire d'au moins une bielle (19) et que le déplacement dudit protecteur central (14) est guidé à l'arrière par ladite bielle (19) et à l'avant par un ergot (23) qui est amené à se déplacer dans une rainure (22).

2. Machine selon la revendication 1, ***caractérisée en ce* que** chaque bielle (19) est liée d'une part à ladite structure porteuse (12) via une articulation inférieure (20) et est liée d'autre part audit protecteur central (14) via une articulation supérieure (21).

3. Machine selon la revendication 2, ***caractérisée en ce* que** lesdites articulations inférieure et supérieure (20, 21) présentent chacune un axe sensiblement horizontal et sensiblement perpendiculaire à la direction d'avance (A).

4. Machine selon la revendication 2 ou 3, ***caractérisée en ce* que** ladite articulation inférieure (20) s'étend sensiblement en dessous de ladite articulation supérieure (21) et que ladite articulation supérieure (21) s'étend sensiblement au-dessus dudit protecteur central (14).

5. Machine selon l'une quelconque des revendications 1 à 4, ***caractérisée en ce* que** ledit protecteur central (14) est déplacé selon un mouvement combiné de rotation et de translation.

6. Machine selon l'une quelconque des revendications 1 à 5, ***caractérisée en ce* que** ledit protecteur central (14) est déplacé vers l'arrière et au-dessus du mécanisme de coupe (4).

7. Machine selon l'une quelconque des revendications 1 à 6, ***caractérisée en ce* que** ledit protecteur central (14) est actionné par un levier (24).

8. Machine selon l'une quelconque des revendications 1 à 7, ***caractérisée en ce* que** durant le travail, ledit protecteur central (14) est verrouillé par l'intermédiaire d'un verrou (25).

9. Machine selon l'une quelconque des revendications 1 à 8, ***caractérisée en* ce qu'**il s'agit d'une machine de fenaison telle qu'une machine de coupe du type faucheuse ou faucheuse-conditionneuse.

## Claims

1. Haymaking machine (1) which can be hitched to a tractor and comprising a frame (2) carrying a cutting mechanism (4) having cutting tools (10) and a carrying structure (12) intended to support a protective device (13), the said protective device (13) being made up of at least one central guard (14), ***characterized in* that** the said central guard (14) is articulated on the said carrying structure (12) by means of at least one rod (19) and that the displacement of the said central guard (14) is guided at the rear by means of the said rod (19) and at the front by means of a lug (23) which is made to move in a groove (22).

2. Machine according to claim 1, ***characterized in* that** each rod (19) is connected on one hand to the said carrying structure (12) via a lower articulation (20) and is connected on the other hand to the said central guard (14) via an upper articulation (21).

3. Machine according to claim 2, ***characterized in* that** the said lower and upper articulations (20, 21) each have a substantially horizontal axis that is substantially perpendicular to the direction of advance (A).

4. Machine according to claim 2 or 3, ***characterized in* that** the said lower articulation (20) extends substantially beneath the said upper articulation (21) and that the said upper articulation (21) extends substantially above the said central guard (14).

5. Machine according to any one of claims 1 to 4, ***characterized in* that** the said central guard (14) is moved in a combined rotation and translation movement.

6. Machine according to any one of claims 1 to 5, ***characterized in* that** the said central guard (14) is moved rearward and above the cutting mechanism (4).

7. Machine according to any one of claims 1 to 6, ***characterized in* that** the said central guard (14) is actuated by a lever (24).

8. Machine according to any one of claims 1 to 7, ***characterized in* that**, during work, the said central guard (14) is locked by means of a latch (25).

9. Machine according to any one of claims 1 to 8, ***characterized in* that** the said machine is a haymaking machine such as a cutting machine of the mower or mower-conditioner type.

## Patentansprüche

1. Heuerntemaschine (1), die an einen Traktor angekuppelt werden kann und ein Rahmen (2), der einen Schneidmechanismus (4) mit Schneidwerkzeugen (10) trägt, und eine Tragstruktur (12) umfasst, die dazu bestimmt ist, eine Schutzvorrichtung (13) zu tragen, wobei die Schutzvorrichtung (13) aus mindestens einem zentralen Schutz (14) besteht, ***dadurch gekennzeichnet,* dass** der zentrale Schutz (14) auf der Tragstruktur (12) mittels mindestens einer Stange (19) angelenkt ist, und dass die Verschiebung des zentralen Schutzes (14) hinten durch die Stange (19) und vorne durch einen Nocken (23), der in einer Rille (22) zur Verschiebung gebracht wird, geführt wird.

2. Maschine nach Anspruch 1, ***dadurch gekennzeichnet,* dass** jede Stange (19) einerseits mit der Tragstruktur (12) über ein unteres Gelenk (20) und andererseits mit dem zentralen Schutz (14) über ein oberes Gelenk (21) verbunden ist.

3. Maschine nach Anspruch 2, ***dadurch gekennzeichnet,* dass** die unteren und oberen Gelenke (20, 21) jeweils eine im Wesentlichen horizontale und im Wesentlichen auf die Vorschubrichtung (A) senkrechte Achse aufweisen.

4. Maschine nach Anspruch 2 oder 3, ***dadurch gekennzeichnet,* dass** sich das untere Gelenk (20) im Wesentlichen unter dem oberen Gelenk (21) erstreckt, und dass sich das obere Gelenk (21) im Wesentlichen über dem zentralen Schutz (14) erstreckt.

5. Maschine nach irgend einem der Ansprüche 1 bis 4, ***dadurch gekennzeichnet,* dass** der zentrale Schutz (14) in einer kombinierten Dreh- und Translationsbewegung verschoben wird.

6. Maschine nach irgend einem der Ansprüche 1 bis 5, ***dadurch gekennzeichnet,* dass** der zentrale Schutz (14) nach hinten und über den Schneidmechanismus (4) verschoben wird.

7. Maschine nach irgend einem der Ansprüche 1 bis 6, ***dadurch gekennzeichnet,* dass** der zentrale Schutz (14) durch einen Hebel (24) betätigt wird.

8. Maschine nach irgend einem der Ansprüche 1 bis 7, ***dadurch gekennzeichnet,* dass** während der Arbeit der zentrale Schutz (14) mittels eines Riegels (25) verriegelt ist.

9. Maschine nach irgend einem der Ansprüche 1 bis 8, ***dadurch gekennzeichnet,* dass** es sich um eine Heuerntemaschine, wie eine Schneidmaschine des Typs Mähmaschine oder Mähknickzetter handelt.
